**Europäisches Patentamt**

**European Patent Office**

**Office européen des brevets**

(19)

(11) Veröffentlichungsnummer: **0 060 916**
A2

(12) # EUROPÄISCHE PATENTANMELDUNG

(21) Anmeldenummer: 81106951.7

(22) Anmeldetag: 04.09.81

(51) Int. Cl.³: **B 23 C 5/22**

(30) Priorität: 24.03.81 DE 8108583 U

(43) Veröffentlichungstag der Anmeldung:
29.09.82 Patentblatt 82/39

(84) Benannte Vertragsstaaten:
AT BE CH DE FR GB IT LI LU NL SE

(71) Anmelder: Biax-Werkzeuge KG Wezel & Co.
Talweg 1
D-7133 Maulbronn(DE)

(72) Erfinder: Wezel, Hans Georg
Frankfurterstrasse 19
D-7133 Maulbronn(DE)

(74) Vertreter: Dreiss, Uwe, Dr. jur. Dipl.-Ing. M.Sc. et al,
Patentanwälte Dreiss, Hosenthien & Fuhlendorf
Gerokstrasse 6
D-7000 Stuttgart 1(DE)

(54) Werkzeug, insbesondere Fräs- oder Bohrwerkzeug.

(57) Die Erfindung betrifft ein Werkzeug, insbesondere ein Fräs- oder Bohrwerkzeug mit n Schneiden tragenden Hartmetallwendeschneidplatten (2), die am Umfang des Werkzeugs (1) verteilt angeordnet sind und zur Schruppbearbeitung von Werkstücken dienen. Zur Ernhöhung der Zerspanungsleistung bei möglichst geringem Leistungsaufwand und hohem Vorschub bei gleichzeitig hoher Standfestigkeit wird vorgeschlagen, daß jede Schneide (4) über ihre Länge eine geometrische Form mit einer Längsteilung T aufweist und daß die Schneiden (4) der einzelnen Wendeplatten (2) mit ihrer Teilung jeweils zur benachbarten Wendeplatte (2) um T/n in Schneidenrichtung versetzt angeordnet sind. Durch diese versetzte Anordnung und die geometrische Formgebung wird eine wesentlich höhere Zerspanungsleistung bei geringeren Schneidkräften erreicht.

Fig. 3

EP 0 060 916 A2

HANS LANGOSCH
Dipl.-Ing. (1963 - 1981)
UWE DREISS
Dr. jur., Dipl.-Ing., M. Sc
HEINZ HOSENTHIEN
Dr.-Ing., Dipl.-Ing.
JÖRN FUHLENDORF
Dipl.-Ing.

**PATENTANWÄLTE**

Beim Europäischen Patentamt zugelassene Vertreter
European Patent Attorneys

**D-7000 STUTTGART 1**
GEROKSTRASSE 6
TF (07 11) 24 57 34/44
TG IDEAPAT
TX 7-22 247 idea d

P für Besucher

DREISS, HOSENTHIEN & FUHLENDORF, D-7000 STUTTGART 1

**Anmelderin:**

BIAX-Werkzeuge KG Wezel & Co.
Präzisionswerkzeugfabrik
Talweg 1
7133 Maulbronn

| Amtl. Akt. Z.<br>Off. Ser. No. | Ihr Zeichen<br>Your Ref. | Unser Zeichen<br>Our Ref.<br>3910 179 | Datum<br>Date |
|---|---|---|---|

## Werkzeug, insbesondere Fräs- oder Bohrwerkzeug

Die Erfindung betrifft ein Werkzeug, insbesondere ein Fräs- oder Bohrwerkzeug mit n Schneiden tragenden Hartmetallwendeplatten, die am Umfang des Werkzeugs verteilt angeordnet sind und zur Schruppbearbeitung von Werkstücken dienen.

Aufgabe der vorliegenden Erfindung ist es, ein
Werkzeug der eingangs genannten Art zu verbessern,
so daß bei geringem Leistungsaufwand eine hohe
Zerspanungsleistung bei hohem Vorschub und bei
hoher Standzeit erreicht wird, wobei gleichzeitig
die Schneidkräfte möglichst klein gehalten werden
sollen.

Zur Lösung dieser Aufgabe sieht die Erfindung vor,
daß jede Schneide über ihre Länge eine geometrische
Form mit einer Teilungslänge T aufweist und daß die
Schneiden der einzelnen Wendeplatten mit ihrer Teilung
jeweils zur benachbarten Schneide um $\frac{T}{n}$ in Schneidenrichtung versetzt angeordnet sind.

Durch die geometrische Formung der Schneide wird
erreicht, daß über die Schneidenlänge sich das Profil
und insbesondere die Querschnittsabmessung des herausgeschnittenen Spans über die Spanbreite ändert. Die
Zerspanungskräfte werden durch die so erreichte
begrenzte Breite der einzelnen abgeschnittenen· Späne
kleiner, da sich die Verformungsarbeit bei der Zerspanung reduziert, wobei gleichzeitig der Spanabfluß
gegenüber einer durchgehenden Schneide wesentlich
verbessert ist.

- 3 -

Besonders vorteilhaft kann die Schneide in ihrer Teilungslänge hauptsächlich durch zwei Bereiche mit unterschiedlichem Krümmungsradius gebildet und durch jeweils eine Spanbrechernut begrenzt sein. Hierdurch werden auch bei der Bearbeitung besonders breiter Flächen nur entsprechend schmale Späne gebildet, die beim Abtransport und bei der Aufbewahrung weniger Platz beanspruchen. Dies kann insbesondere dadurch erreicht werden, daß die Krümmungsmittelpunkte der zwei Bereiche mit unterschiedlichem Krümmungsradius auf einer Schneidennormalen liegen, wobei diese Schneidennormale die Schneide im Übergangspunkt der beiden Krümmungsradien schneidet.

Als besonders zweckmäßig hat sich erwiesen, die beiden unterschiedlichen Krümmungsradien in einem Verhältnis von etwa 1 : 30 bis 1 : 40 zu wählen. Dabei kann der kleine Krümmungsradius etwa 0,2 T und der große Krümmungsradius etwa 6,5 T betragen bei einer Tiefe der Spanbrechernut von etwa 0,1 T.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Fig. 1      die Ansicht einer dreieckförmigen Hartmetall-Wendeschneidplatte,

Fig. 2      die Ansicht einer viereckig
ausgebildeten Hartmetall-Wendeschneidplatte,

Fig. 3      einen Ausschnitt der in den Fig. 1
und 2 dargestellten Verzahnung
in wesentlich größerem Maßstab,

Fig. 4      eine Stirnansicht eines Fräswerkzeugs mit n Hartmetall-Wendeschneidplatten und

Fig. 5      eine Draufsicht auf das in Fig. 4
dargestellte Fräswerkzeug, teilweise
im Schnitt.

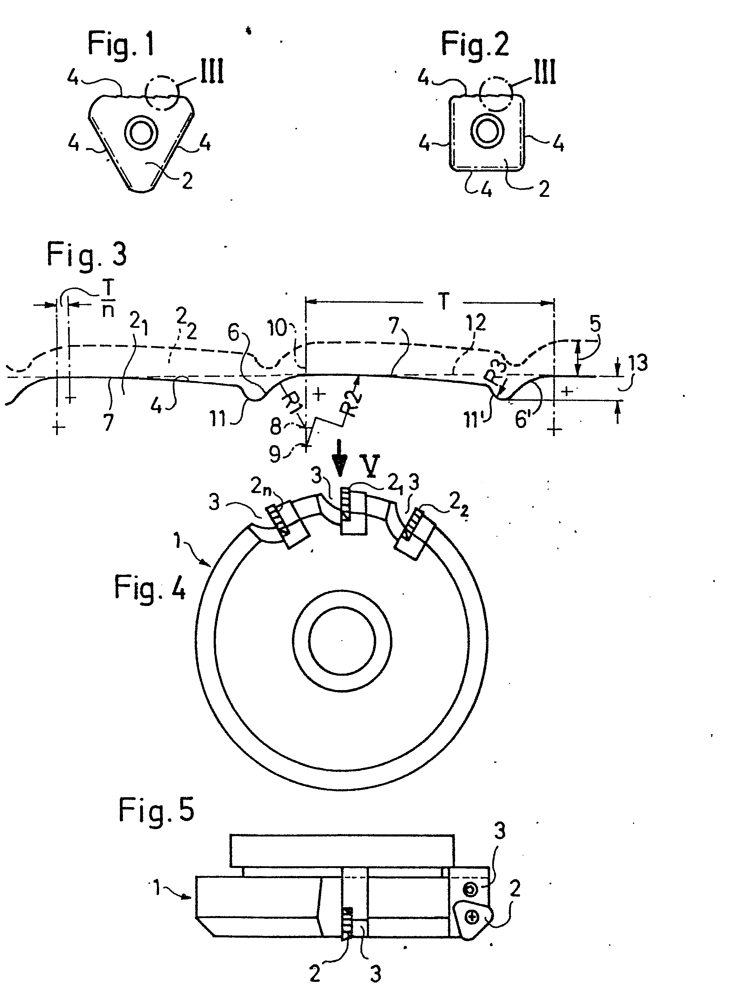

Beim in den Fig. 4 und 5 dargestellten Fräs- oder Aufbohrwerkzeug 1 sind am Umfang verteilt n = 12 Hartmetall-
Wendeschneidplatten $2_n$ in entsprechenden Aussparungen
3 austausch- und einstellbar angeordnet. Diese Hart-
metall-Wendeschneidplatten 2 können dreieckförmig
(Fig. 1), viereckförmig (Fig. 2) oder eine sonstige
zweckmäßige Form aufweisen.

Die Schneiden 4 der Hartmetall-Wendeschneidplatten 2
sind nicht durchgehend gerade, sondern geometrisch geformt, wie aus der maßstäblich größeren Darstellung in Fig. 3 ersichtlich ist. Dabei weist die geometrische Formgebung eine Teilung T auf. Diese Teilung T ist von Hartmetall-Wendeschneidplatte $2_1$ zu Hartmetall-Wendeschneidplatte $2_2$ um $\frac{T}{n}$ versetzt, so daß bei der Drehbewegung des Werkzeugs 1 jeweils ein versetzter Schneideneingriff erfolgt. Der Einsatz der einzelnen Schneiden 4 der Hartmetall-Wendeplatten 2 erfolgt hier durch diese geometrische Gestaltung wesentlich weicher und insbesondere kann eine wesentlich erhöhte Schruppleistung bei der Werkstückbearbeitung erreicht werden. Der versetzte Eingriff ist in Fig. 3 schematisch dargestellt, wobei der Vorschubweg 5 pro Hartmetall-Wendeschneidplatte $2_1$ - $2_2$ stark überhöht dargestellt ist.

Die geometrische Ausbildung der Schneiden 4 ist in Fig. 3 dargestellt. Der Schneidenverlauf setzt sich zusammen aus einem Schneidenteil 6 mit dem Krümmungsradius R1, an den sich ein Schneidenteil 7 mit einem wesentlich größeren Krümmungsradius R2 anschließt, dabei liegen die beiden Krümmungsmittelpunkte 8 und 9 auf einer Schneidennormalen 10. Zwischen dem Schneidenteil 7 und dem anschließenden Schneidenteil 6' ist eine Spanbrechernut 11' vorgesehen, die gegenüber der Schneidentangente 12 eine Tiefe 13 aufweist. Der Grund der Spanbrechernut 11 ist mit einem Radius R3 gerundet, wobei die einzelnen Rundungen stetig ineinander übergehen. Bezogen auf die Teilung T beträgt beim dargestellten Ausführungsbeispiel der Radius R1 etwa 0,2 T, der Radius R2 etwa 6,5 T, die Tiefe 13 der Spanbrechernut etwa 0,1 T und der Radius R3 der Spanbrechernut 11 etwa 0,05 T.

Die Schneiden 4 der einzelnen Hartmetall-Wendeschneidplatten sind gleich ausgebildet, aber die geometrische Teilung ist von Hartmetall-Wendeschneidplatte 2 gegenüber der benachbarten Hartmetall-Wendeschneidplatte 2 um $\frac{T}{n}$ versetzt. Damit müssen aber die Hartmetall-Wendeschneidplatten 2 mit einer fortlaufenden Kennzeichnung versehen werden und es müssen alle Hartmetall-Wendeschneidplatten 2 jeweils in dieser festgelegten Reihenfolge am Werkzeug 1 montiert werden, und es muß weiter die Schneidengeometrie der einzelnen Schneiden hier identisch ausgebildet sein.

Ansprüche
—————————

1. Werkzeug, insbesondere Fräs- oder Bohrwerkzeug mit n Schneiden tragenden Hartmetall-Wendeschneidplatten (2), die am Umfang des Werkzeugs (1) verteilt angeordnet sind und zur Schruppbearbeitung

   von Werkstücken dienen, dadurch gekennzeichnet, daß jede Schneide (4) über ihre Länge eine geometrische Form mit einer Längsteilung T aufweist und daß die Schneiden (4) der einzelnen Wendeplatten (2) mit ihrer Teilung jeweils zur benachbarten Wendeplatte

   (2) um $\frac{T}{n}$ in Schneidenrichtung versetzt angeordnet

   sind.


2. Werkzeug nach Anspruch 1, dadurch gekennzeichnet, daß die Schneiden (4) in ihrer Teilungslänge T hauptsächlich durch zwei Schneidenteile (6,7) mit unterschiedlichem Krümmungsradius R1, R2 gebildet und durch jeweils eine Spanbrechernut (11,11') begrenzt ist.


3. Werkzeug nach Anspruch 2, dadurch gekennzeichnet, daß die Krümmungsmittelpunkte (8,9) der zwei Schneidenteile (6,7) mit unterschiedlichem Krümmungsradius R1, R2 auf einer Schneidennormalen (10) liegen und daß diese Schneidennormale (10) die Schneide (4) im Übergangspunkt der beiden Krümmungsradien R1, R2 schneidet.

4. Werkzeug nach Anspruch 2 oder 3, dadurch gekennzeichnet, daß das Verhältnis der beiden unterschiedlichen Krümmungsradien R1, R2 etwa 1 : 33 ist.

5. Werkzeug nach Anspruch 3 oder 4, dadurch gekennzeichnet, daß der kleine Krümmungsradius R1 etwa 0,2 T beträgt.

6. Werkzeug nach Anspruch 3 oder 4, dadurch gekennzeichnet, daß der große Krümmungsradius R2 etwa 6,5 T beträgt.

7. Werkzeug nach einem der Ansprüche 2 bis 6, dadurch gekennzeichnet, daß die Tiefe (13) der Spanbrechernut (11,11') etwa 0,1 T beträgt.

8. Werkzeug nach Anspruch 2 oder 7, dadurch gekennzeichnet, daß die Spanbrechernut (11,11') eine gleichmäßige Krümmung mit einem Radius R3 von etwa 0,05 T aufweist.

- 3 -

9. Werkzeug nach einem der Ansprüche 1 bis 8,
   dadurch gekennzeichnet, daß die einzelnen Hartmetall-Wendeschneidplatten ($2_1$... bis $2_n$) in
   Umfangsrichtung fortlaufend bezeichnet sind.

Fig. 1

Fig. 2

Fig. 3

Fig. 4

Fig. 5